(19) Europäisches Patentamt
European Patent Office
Office européen des brevets

(11) Veröffentlichungsnummer: **0 042 617**
**B1**

(12) # EUROPÄISCHE PATENTSCHRIFT

(45) Veröffentlichungstag der Patentschrift: **03.04.85**

(21) Anmeldenummer: **81104829.7**

(22) Anmeldetag: **23.06.81**

(51) Int. Cl.[4]: **C 08 G 59/50,** C 08 G 59/62, C 07 C 89/00, C 07 C 91/30, C 09 D 3/58

(54) **Verfahren zur Herstellung von Formkörpern und Überzügen.**

(30) Priorität: **24.06.80 DE 3023464**

(43) Veröffentlichungstag der Anmeldung:
**30.12.81 Patentblatt 81/52**

(45) Bekanntmachung des Hinweises auf die Patenterteilung:
**03.04.85 Patentblatt 85/14**

(84) Benannte Vertragsstaaten:
**AT CH DE FR GB LI**

(56) Entgegenhaltungen:
**DE-A-2 025 343**
**DE-A-2 754 535**
**DE-A-2 838 306**
**DE-B-2 025 159**
**US-A-3 950 451**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Becker, Wilhelm, Dr.**
**Öjendorfer Höhe 37C**
**D-2000 Hamburg 74 (DE)**
Erfinder: **Hübner, Herbert, Dr.**
**Lohnerstrasse 34**
**D-8261 Burgkirchen/Alz (DE)**
Erfinder: **Marten, Manfred**
**Schneeheide 36**
**D-2104 Hamburg 92 (DE)**

**EP 0 042 617 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Es ist bekannt, aliphatische oder cycloaliphatische Amine, wie Triäthylentetramin, Isophorondiamin, m-Xylylendiamin oder 2-Aminoäthylpiperazin, entweder unmodifiziert oder in Form von Epoxidaddukten zusammen mit flüssigen Epoxidharzen auf der Basis von aromatischen oder aliphatischen Grundkörpern als lösungsmittelfreie Anstrichsystem zu verwenden. Derartige Produkt sind im Handel und können zur Erzielung optimaler Verarbeitungseigenschaften noch Modifizierungsmittel (niedermolekulare Mono- oder Diglycidylverbindungen sowie Beschleuniger) enthalten. Die Aushärtung der Anstriche erfolgt im Temperaturbereich von 10 bis 30°C.

Man erhält farbstabile Anstrieche, jedoch mit schlechten lacktechnischen Eigenschaften und schlechten Beständigkeiten gegenüber Chemikalien. Ver allem wird die Filmoberfläche bei der Aushärtung im Temperaturbereich von 10 bis 30°C und in Gegenwart von Luftfeuchtigkeit und $CO_2$ sehr nachteillig beeinflußt: Es treten Glanzminderung, Schleier, Weißanlaufen ("flushing") und Ausschwitzungen auf, die die Anwendung dieser Härter für viele Anwendungszwecke unmöglich machen. Derartige System eignen sich aush nicht zur Herstellung von Anstrichen, die mit Lebensmitteln in Kontakt kommen, da die Härter auf Basis von Amin den Epoxidharzbeschichtungen eine ungenügende Resistenz gegenüber organischen Säuren (z. B. Fruchtsäften) verleihen.

Durch Zusatz von Phenolen, z. B. Alkylphenolen, oder methylolgruppenhaltigen Verbindungen zu den obigen Systemen konnten zwar gewisse Verbesserungen erzielt werden, von denen die bessere Filmoberfläche hervorzuheben ist. Nach wie vor unbefriedigend ist jedoch einerseits die kurze Topfzeit der Mischungen und andererseits die Bewständigkeit der erzeugten Filme gegenüber organischen Säuren, wäßrigen Agenzien und Alkohollösungen. Mit diesen Lösungsmitteln werden nämlich Bestandteile des Films, insbesondere die als Beschleuniger zugesetzten Phenole, herausgelöst, was den Einsatz solcher System auf dem Lebensmittelsektor unmöglich macht.

Nachteilig ist außer der hohen Reaktivität und der dadurch bedingten bereits erwähnten kurzen Topfzeit die Eigenviskosität dieser Härtungsmittel.

Bekannt ist auch die Aktivierung von Diaminen, die als Vernetzer für Epoxidverbindungen eingesetzt werden, z. B. Äthylendiamin, Diäthylentriamin, Triäthylentetramin, Tetraäthylenpentamin oder cycloaliphatischen Diaminan durch gemeinsame Kondensation mit Phenolen und Aldehyden bzw. durch Umsetzung z.B. von 3,3,5-Trimethyl-5-aminomethylcyclohexylamin mit Phenol-Aldehyd-Reaktionsprodukten. Obgleich diese Kondensationsprodukte sehon einige Verbesserungen gegenüber einer einfachen Aktivierung der Polyamine durch Zumischung von Phenolen bringen, genügen sie noch nicht allen Ansprüchen.

Die mit diesen bekannten Vernetzern mit Epoxidharzen auf Bisphenol A-Basis hergestellten Beschichtungen werden auch in starkem Maße durch organische Säuren angegriffen oder bilden beim Benetzen mit Wasser einen weißen Belag aus. Außerdem sind auch die mechanischen Eigenschaften der ausgehärteten Epoxidharzmassen unbefriedigend.

Aus der DE—OS 2 612 211 und DE—AS 2 025 159 ist weiter bekannt, daß durch Umsetzung aliphatischer Amine mit Formaldehyd und Phenol Aminhärter synthetisiert werden können, deren Mischungen mit Epoxiden Filme mit guten Beständigkeiten gegenüber organischen Säuren und verdünnten Alkoholen ergeben. Diese Härtungsmittel enthalten jedoch freies Phenol, das ebenfalls durch Lösungsmittel aus den Filmen herausgelöst werden kann, was den Einsatz solcher System aus dem Labensmittelsektor unmöglich macht.

In der DE—AS 20 25 159 ist als Kondensationsprodukt 8 die Herstellung einer Mannichbase der allgemeinen Formel

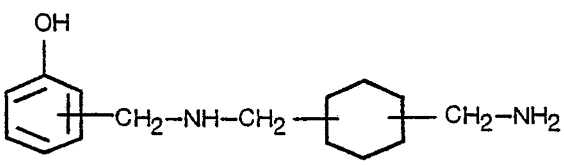

beschrieben, die kein freies Phenol enthält und die zu 35 Gew.-% in 4,4'-Diamino-3,3'-dimethyl-cyclohexylmethan gelöst, als Vernetzungsmittel für Epoxidharze dienen kann. Der Einsatz dieser Verbindung auf dem Lebensmittelsektor ist wegen der Phenolfreiheit möglich. Durch den geringen Anteil von phenolischen Hydroxylgruppen von 2,4 Gew.-% in dieser Lösung aus Marnich-Base und Amin ist jedoch besonders bei niedrigen Temperaturen nur eine sehr langsame Aushärtung zu erreichen.

Bekannt ist weiterhin nach DE—OS 28 23 682, als Härtungsmittel Umsetzungsprodukte, die aus Mannichbasen und Polyaminen unter Aminaustausch und Abspaltung von sekundärem Amin hergestellt werden, einzusetzen. Diese Härtungsmittel sind Umsetzungsprodukte aus Polyaminen oder aromatischen Aminen mit Mannichbasen aus Formaldehyd, Phenolen und sekundären Aminen. Sie können, da sie Phenol nur in gebundener Form enthalten, in gewissem Umfang für Beschichtungen auf Basis von Epoxidharzen auf dem Lebensmittelsektor eingesetzt werden. Jedoch werden derartige Beschichtungen schon durch verdünnte wäßrige Lösungen organischer Säuren, wie Ameisensäure, Essigsäure oder Milchsäure, nach kurzer Zeit zerstört.

Ziel der vorliegenden Erfindung ist es, Härtungsmittel zur Verfügung zu stellen, die sowohl frei von ungebundenem Phenol sind als auch sind eine hervorragende Chemikalienbeständigkeit, besonders gegenüber organischen Säuren, aufweisen.

Überraschenderweise wurde nun ein Verfahren zum Herstellen von Formkörpern und Überzügen durch Umsetzen von Epoxidverbindung mit mehr als einer 1,2-Epoxidgruppe pro Molekül, die sich gegebenenfalls im Gemisch mit Monoepoxiden befinden, mit substituierten Aminen gefunden, wobei man als substituierte Amine Verbindungen der allgemeinen Formel

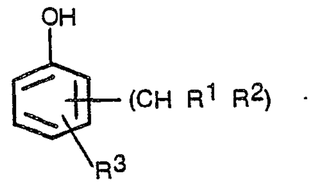

(I)

ein setzt, worin

$R^1$ H oder $CH_3$,

$R^2$

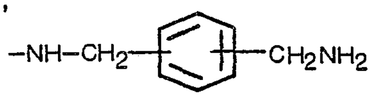

(II) und/oder

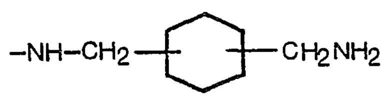

(III)

und

$R^3$ H–, HO–, HOOC– oder $CH_3$ bedeuten,

das dadurch gekennzeichnet ist, daß solche Amine der Formel (I), die keine freien Phenole enthalten, eingesetzt werden, die durch Umsetzung von Xylylendiamin oder dessen Isomerengemischen und/oder dessen Hydrierungsprodukten in Form von Bis-(aminomethyl-)cyclohexan nach einem der folgenden Verfahren hergestellt worden sind:

a) mit Hydroxybenzaldehyden oder Hydroxyacetophenonen in erster Stufe zu den Schiff'schen Basen, in zweiter Stufe deren Hydrierung zu Verbindungen der Formel (I),

b) mit phenolfreiem Dimethylaminomethyl-phenol oder -kersol bzw. mit phenolfreien Mannich-Basen aus Phenolen, Formaldehyd und solchen primären Monoaminen, deren aliphatisches α-C-Atom an mindestens zwei aliphatische C-Atome von Kohlenwasserstoffresten gebunden ist, und/oder deren Substitutionsprodukte, die eine für die Reaktion inerte Gruppe enthalten, unter weitgehender oder vollständiger Abspaltung des Dimethylamins bzw. der in der Mannich-Base enthaltenen primären Monoamine unter Bildung von Verbindungen der Formel (I),

c) mit Phenol-Hexamethylentetramin-Kondensationsprodukten der Formeln

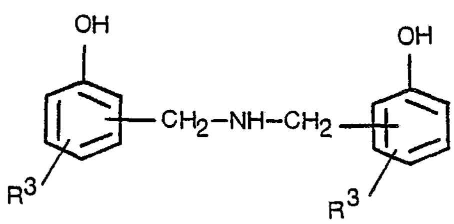

(IV) und/oder

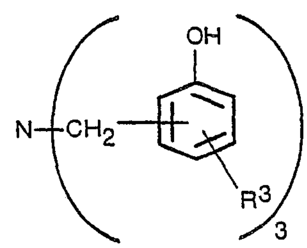

(V)

die keine freien Phenole enthalten, zu Verbindungen der Formel (I) unter Abspaltung von Ammoniak.

Nach den erfindungsgemäßen Verfahren lassen sich Beschichtungen mit einer hervorragenden Chemikalienbeständigkeit herstellen.

Im erzelnen verläuft die Herstellung der Aminhärter z. B. wie folgt:

Verfahren a)

Umsetzung zu den Schiff'schen Basen und anschließende Hydrierung, z. B. mit Raney-Nickel in methanolischer Lösung bei 50 bis 100 bar $H_2$, zu den Mannich-Basen nach Reaktionsschema A (siehe Formelblatt, Gleichungen (1)—(2) und (3)—(4)).

Ansteille von Raney-Nickel können bei der Hydrierung auch Platin-, Palladium-Wasserstoff, Lithium-Aluminium-Hydrid, Boranate, Wie Na $BH_4$ oder dergleichen verwendet werden.

Verfahren b)

Diese Reaktion verläuft nach Schema B (sieh Formelblatt, Gleichung (5)—(6)), wobei im Fall der Mannich-Basen die Gruppe —$N(CH_3)_2$ durch

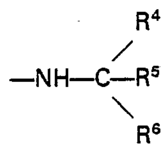

ersetzt ist.

Verfahren c)

Reaktionsverlauf C (siehe Formelblatt, Gleichungen (7) und (8)).

Bei der Umsetzung a) können als Hydroxybenzaldehyde bzw. Hydroxyacetophenone beispielsweise eingesetzt werden: o- und/oder p-Hydroxyacetophenon, weitere Hydroxyphenylmethylketone, die in üblicher Weise synthetisiert werden können, vorzugsweise Salicylaldehyd und/oder p-Hydroxybenzaldehyd. o-Hydroxyphenylmethylketone erhält man z. B. durch Acylierung von Phenolen mit Säurechloriden oder Anhydriden und nachfolgender Friesumlagerung D (siehe Formelblatt, Gleichung D)). Befindet sich in p-Stellung zur OH-Gruppe ein Wasserstoffatom ($R^3$ = H), so können neben den Schiffschen Basen der o-Hydroxyphenylalkylketone auch die entsprechenden p-Hydroxyphenylalkylketone entstehen.

$R^1$ und $R^3$ haben die schon gennate Bedeutung.

Die Unsetzung b) kann direkt bei erhöhter Temperatur von 100 bis 200°C oder auch bei gleichen Bedingungen in einem unter den Reaktionsbedigungen inerten organischen Lösungsmittel wie Cyclohexan, Tetrahydrofuran und insbesondere Toluol oder Xylol durchgeführt werden.

Als primäre Monoamine eignen sich z. B. solche, die einen em α-C-Atom verzweigten Alkylrest oder Cycloalkylrest aufweisen, und/oder deren Substitutionsprodukte mit Alkyl-, Hydroxy- oder Äthergruppen von aliphatischen einwertigen Alkoholen, wobei der Alkylrest jeweils 1 bis 5 C-Atome hat, und die der Strukturformel

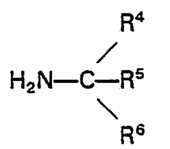

entsprechen, in der $R^4$ bis $R^6$ gleiche oder verschiedene Alkylreste mit 1 bis 5 C-Atomen darstellen, jedoch einer der Reste $R^4$ bis $R^6$ auch Wasserstoff sein kann und in diesem Falle die beiden anderen zusammen einen Alkylenrest von 4 bis 6 C-Atomen darstellen können. Beispielsweise seien genannt Isopropylamin, sek. Butylamin, t-Butylamin, t-Amylamin, t-Hexylamin, t-Heptylamin, t-Octylamin, t-Nonylamin, t-Decylamin, Cyclopentylamin, Cyclohexylamin, 2-Aminobutanol-1,4-Methyl-4-aminopentanol-2 und 1-Methoxymethylpropylamin, wobei die Amine von t-Heptylamin an aufwärts eine solche struktur haben, daß kein Rest mehr als 5 C-Atome hat. Bevorzugt werden t-Butylamin und t-Amylamin eingesetzt.

Bei der Umsetzung c) werden solche Verbindungen der Formeln (IV) bzw. (V) zur Reaktion gebracht, die durch Kondensation der Phenole mit Hexamethylentetramin z. B. im Molverhältnis 3:1 bis 6:1, vorzugsweise (3,5 bis 4,5):1 im Temperaturbereich von 130 bis 190°C in einem Druckgefäß hergestellt worden sind. Aus der erhaltenen, gegebenenfalls gemahlenen bzw. in Lösungsmittel gelösten Masse wird durch Extraktion mit Wasser das nicht gebundene Phenol entfernt. Als Phenole könne auch Diphenole und/oder Phenolcarbonsäuren verwendet werden, z. B. Resorcin, Hydrochinon, Salicylsäure und/oder p-Hydroxyphenylcarbonsäure. Vorzugsweise geht man bei allen drei Verfahren vom m-Xylylendiamin und dessen Isomerengemischen bzw. dessen Hydrierungsprodukten aus.

Die erhalten gereinigten Kondensate werden im entsprechenden Molverhältnis mit dem Diamin bei Temperaturen von 100 bis 200°C, bevorzugt 120 bis 160, insbesondere 130 bis 150°C direkt oder bei den gleichen Temperaturbedingungen in einem organischen Lösungsmittel wir Toluol oder Xylol gemäß Reaktion c) zu den Mannich-Basen umgesetzt, wobei Ammoniak entweicht.

Die Kondensation der Phenole, Diphenole und/oder Phenolcarbonsäuren mit Hexamethylentetramin kann auch direkt mit Xylylendiamin und/oder seinen Hydrierungsprodukten bei erhöhten Temperaturen von 100 bis 200°C, bevorzugt 120 bis 160°C, vorgenommen werden, wobei unter Ammoniakabspaltung die Reaktionen (7) und (8) nacheinander ablaufen.

Auf die erfindungsgemäße Weise ist es entgegen dem bisherigen Stand der Technik möglich, Produkte zu erhalten, die einen Mindestgehalt an phenolischen OH-Gruppen von 6, 3, vorzugsweise über 6, 7 Gew.-% aufweisen. Ein solch besonders hoher Gehalt an phenolischen OH-Gruppen ist nun wegen seiner hohen Chemikalienbeständigkeit, vor allem gegenüber organischen Säuren, für die Herstellung von Beschichtungen, insbesondere auf dem Lebensmittelsektor, z. B. für Konservendosen, wünschenswert. Die Erfindung ermöglicht es daher also erstmalig. Formkörper und Überzüge herzustellen, die eine ausgezeichnete Ghemikalienbeständigkeit aufweisen. Ferner zeigen sie einen hohen Glanz. Besonders günstig für die Verwendung auf dem Lebensmittelsektor wirkt sich auch die Tatsache aus, daß die als Härter eingesetzten Mannich-Basen keine freien Phenole enthalten. Ein weiterer Vorteil ist darin zu sehen, daß die Härtung der Epoxydverbindungen auch bei niedrigen Temperaturen erfolgen kann.

Geeignete Epoxidharze sind z. B. solche mit einer Viskosität von 2000 bis 40 000, bevorzugt 5000 bis 15,000 mPa.s/25°C, wie Diglycidyläther auf Basis von Diphenylolpropan und -methan, Glycidyläther von Phenol-Formaldehyd-Kondensaten (Epoxidnovolake), jeweils einzeln oder im Gemisch sowie im Gemisch mit Glycidyläthern von aliphatischen ein- oder mehrwertigen Alkoholen wie n-Butanol, 2-Äthylhexanol, Butandiol, Pentaerythrit oder Phenolen bzw. Alkylphenolen wir o-Kresol oder p-tert.-Butylphenol, Glycidylestern von Phthalsäure, Hexahydrophthalsäure, Tetrahydrophthalsäure.

Die Beschichtungsmassen, die die erfindungsgemäß erhaltenen Amine enthalten, können übliche organische und/oder anorganische Pigmente zur Farbgebung enthalten und weitere übliche Zusätze, wie Thixotropiermittel, z. B. pyrogene Kieselsäure, Lackhilfsmittel, wie Verlaufs-, Dispergier- und Antiabsetzmittel. Sie können außerdem Lösungsmittel wie niedere Alkohole, Toluol, Xylol, Benzylalkohole, Ketone oder Flexibilisatoren wie Phthalsäureester von einwertigen Alkoholen, z. B. n-Butanol, Amylalkohol, 2-Äthylhexanol, Nonanol, Benzylalkohol einzeln oder im Gemisch, γ-Butyrolacton, δ-Valcrolacton, ε-Caprolacton, niedriger- und höher-molekulare mehrwertige Alkohole, z. B. Glyzerin, Trimethylol-äthan oder-propan, Äthylenglykol sowie oxäthylierte oder oxpropylierte mehrwertige Alkohole sowie Vernetzungsbeschleuniger enthalten.

Zweckmäßig werden die substituierten Amine als Härtungsmittel in solchen Mengen eingesetzt, die den im Epoxidharz enthaltenen Epoxydgruppen äquivalent sind, jedoch ist in vielen Fällen ein Überschuß bis zu 50 Mol-% möglich. Hervorzuheben ist, daß mit den neuen Vernetzungsmitteln auch bei niedrigen Temperaturen von etwa 0°C, gegebenenfalls schon bei −5°C eine Vernetzung erfolgt. Auch kann bei hoher Luftfeuchtigkeit, und in manchen Fällen sogar unter Wasser ausgehärtet werden.

Man erhält vernetzte Epoxidharzkunststoffe, die eine ausgezeichnete Wasser-, Säure- und Chemiekalienfestigkeit, guten Oberflächenglanz und sehr gute Elastizität besitzen. Die Formkörper können auch als Laminate, Klebe- oder Kittbindungen sowie Beschichtungs-, Auskleidungs- und Reparaturmaterial für Betonfußböden und Betonrohre erfindungsgemäß gehärtet vorliegen. Sie können die erfindungsgemäß erhaltenen Umsetzungsprodukte auch als Kunstharzzemente enthalten.

In den folgenden Beispielen bedeutet % Gew.-%.

## Beispiele

### I) Herstellung der Aminhärter

1 bis 4 nach Verfahren a) und Vergleich 5V zu Verfahren a)

Aus Molaren Mengen

1) Salicylaldehyd und m-Xylylendiamin,

2) p-Hydroxybenzaldehyd und m-Xylylendiamin,

3) p-Hydroxyacetophenon und m-Xylylendiamin,

4) p-Hydroxybenzaldehyd und einem Isomerengemisch von 1,3- und 1,4-Bis(aminomethyl-)cyclohexan und

5V) p-Hydroxybenzaldehyd und Triäthylentetramin

wurden jeweils die Schiff'schen Basen hergestellt.

Dazu wurden die Amine in einem mit einem Wasserabscheider ausgerüsteten Dreihalskolben vorgelegt, mit 20%, jeweils auf die Gesamtmenge Amin/Aldehyd bezogen, Toluol versetzt. Unter Kühlung und Rühren wurde der Aldehyd zugesetzt. Im Kreislauf wurde bei erhöhter Temperatur unter Rückführung des Toluols pro Mol Aldehyd 1 Mol $H_2O$ abgeschieden. War die theoretische Wassermenge entfernt, wurde unter vermindertem Druck von ca. 25 mbar bei Temperatur-steigerung bis 100°C das Toluol entfernt. Man erhielt die Schiff'schen Basen als viskose Flüssigkeiten, die teilweise kristallisierten. Die Aminzahlen waren wie folgt:

| Beispiel | Aminzahl gef. | Theorie |
|---|---|---|
| 1 | 465 | 467 |
| 2 | 463 | 467 |
| 3 | 438 | 442 |
| 4 | 452 | 456 |
| 5 (Vergleich) | 883 | 895 |

Die Schiff'schen Basen wurden 1 : 1 in Methanol gelöst, mit 1,5 bis 4% Raney-Nickel, bezogen auf die Lösung, versetzt und bei 80°C und 50 bis 100 bar mit Wasserstoff bis zur Beendigung der $H_2$-Aufnahme

hydriert. Danach wurde vom Katalysator abfiltriert und das Lösungsmittel unter vermindertem Druck bis zu einer Temperatursteigerung bis 100°C wieder abdestilliert.

Man erhielt die Mannich-Basen als viskose Flüssigkeiten, die hauptsächlich aus den Verbindungen (9) bis (12) und (13 V) (Vergleich) (siehe Formelblatt) bestehen. Diese Formeln entsprechen in der Reihenfolge den Produkten der Beispiele 1 bis 4 und Vergleich 5.

Der Ni-Gehalt der Mannich-Basen 1 bis 4 war kleiner als 0,01%, im Falle des Salizylaldehyd-Derivats betrug er 0,4%.

Die Mannich-Base aus p-Hydroxybenzaldehyd/Triäthylentetramin enthielt ca. 1,5% Ni.

Der Gehalt an phenolischem OH entsprach der Theorie:

| Beispiel | phenolisches OH% gef. | phenolisches OH% Theorie |
|---|---|---|
| 1 | 6,91 | 7,02 |
| 2 | 6,95 | 7,02 |
| 3 | 6,59 | 6,64 |
| 4 | 6,83 | 6,85 |
| 5 (Vergleich) | 6,62 | 6,75 |

6) Verfahren b)

465 g phenolfreies Dimethylaminomethylphenol, 7,10 mVal N/g und 6,20 mVal OH/g enthaltend, wurden in 581 g Toluol gelöst und 19 Stunden lang mit 392 g m-Xylylendiamin am Rückfluß erhitzt. Das Mol-Verhältnis Dimethylaminomethylphenol/m-Xylylendiamin entsprach 1 : 0,87. Das durch m-Xylylendiamin verdrängte Dimethylamin wurde in Wasser aufgefangen. Nach Abspaltung von ca. 90% der theoretischen Dimethylamin-Menge wurde das Reaktionsgemisch filtriert und durch Destillation unter vermindertem Druck von ca. 25 mbar vom Toluol befreit. Man erhielt eine phenolfreie, viskose Mannich-Base mit einem Gehalt an phenolischen OH-Gruppen von 6,59% und einem Wasserstoffäquivalentgewicht von 86.

7) Verfahren b)

600 g phenolfreies Dimethylaminomethylphenol, 7,10 mVal N/g und 6,20 mVal OH/g enthaltend, wurden in 750 g Toluol gelöst, 18 Stunden lang mit 580 g m-Xylylendiamin am Rückfluß erhitzt. Das Mol-Verhältnis Dimethylaminomethylphenol/m-Xylylendiamin entsprach 1 : 1. Das durch m-Xylylendiamin verdrängte Dimethylamin wurde in Wasser aufgefangen. Nach Abspaltung von ca. 92% der theoretischen Dimethylamin-Menge wurde das Reaktionsgemisch filtriert und durch Destillation unter vermindertem Druck von ca. 20 mm Hg vom Toluol befreit. Man erhielt eine phenolfreie, viskose Mannich-Base mit einem Gehalt an phenolischen OH-Gruppen von 6,45% und einem Wasserstoffäquivalentgewicht von 77,3.

8) Verfahren b)

163 g phenolfreies Dimethylaminomethylphenol, 7,10 mVal N/g und 6,20 mVal OH/g enthaltend, wurden in 150 g Toluol gelöst und 17 Stunden lang mit 142 g Bis-(aminomethyl-)cyclohexan am Rückfluß erhitzt. Das Mol-Verhältnis Dimethylaminomethylphenol/Bis-(aminomethyl-)cyclohexan entsprach 1 : 1. Das durch Bis-(aminomethyl-)cyclohexan verdrängte Dimethylamin wurde in Wasser aufgefangen. Nach Abspaltung von ca. 93% der theoretischen Dimethylamin-Menge wurde das Reaktionsgemisch filtriert und durch Destillation unter vermindertem Druck von ca. 25 mbar vom Toluol befreit.

Man erhielt eine phenolfreie, viskose Mannich-Base mit einem Gehalt an phenolischen OH-Gruppen von 6,68% und einem Wasserstoffäquivalentgewicht von 88,5.

9) Verfahren b)

505 g kresolfreies Dimethylaminomethylkresol, 7,10 m-Val N/g und 6,20 m Val OH/g enthaltend, wurde in 581 g Toluol gelöst und 20 Stunden lang mit 392 g m-Xylylendiamin am Rückfluß erhitzt. Das Mol-Verhältnis Dimethylaminomethylkresol/m-Xylylendiamin entsprach 1 : 0,87. Das durch m-Xylylendiamin verdrängte Dimethylamin wurde in Wasser aufgefangen. Nach Abspaltung von ca. 93% der theoretischen Dimethylamin-Menge wurde das Reaktionsgemisch filtriert und durch Destillation unter vermindertem Druck von ca. 25 mbar von Toluol befreit. Man erhielt eine kresolfreie, viskose Mannich-Base mit einem Gehalt an phenolischen OH-Gruppen von 6,3 Gew.-% und einem Wasserstoffäquivalentgewicht von 94.

10) Vergleich zu Verfahren b)

435 g phenolfreies Dimethylaminomethylphenol, 7,10 mVal N/g und 6,20 mVal OH/g enthaltend, wurdan, in 375 g Toluol gelöst, 18 Stunden lang mit 180 g Äthylendiamin am Rückfluß erhitzt. Das Mol-Verhältnis Dimethylaminomethylphenol/Äthylendiamin entsprach 1 : 1. Das durch Äthylendiamin

verdrängte Dimethylamin wurde in Wasser aufgefangen. Nach Abspaltung von ca. 92% der theoretischen Dimethylamin-Menge wurde das Reaktionsgemisch filtriert und durch Destillation unter vermindertem Druck von ca. 25 mbar vom Toluol befreit. Man erhielt eine phenolfreie, viskose Mannich-Base mit einem Gehalt an phenolischen OH-Gruppen von 9,32% und einem Wasserstoffäquivalentgewicht von 53,3.

11) Vergleich zu Verfahren b)

163 g phenolfreies Dimethylaminomethylphenol, 7,10 mVal N/g und 6,20 mVal OH/g enthaltend, wurden, in 150 g Toluol gelöst, 19 Stunden lang mit 146 g Triäthylentetramin unter Rückfluß erhitzt. Das Mol-Verhältnis Dimethylaminomethylphenol/Triäthylentetramin entsprach 1 : 1. Das durch Triäthylentetramin verdrängte Dimethylamin wurde in Wasser aufgefangen. Nach Abspaltung von ca. 91% der theoretischen Dimethylamin-Menge wurde das Reaktionsgemisch filtriert und durch Destillation unter vermindertem Druck von ca. 25 mbar vom Toluol befreit.

Man erhielt eine phenolfreie, viskose Mannich-Base mit einem Gehalt an phenolischen OH-Gruppen von 6,58% einem Wasserstoffäquivalentgewicht von 53.

12) Verfahren c)

94 g Phenol (1 Mol) und 35 g Hexamethylentetramin (0,25 Mol) wurden in einem Dreihalskolben zusammen auf 180°C erhitzt und 15 Minuten bei dieser Temperatur belassen. Nach dem Abkühlen wurde das Reaktionsgemisch pulverisiert und durch mehrmaliges Waschen mit $H_2O$ von nicht umgesetztem Phenol und Hexamethylentetramin befreit. Anschließend wurde das Reaktionsprodukt, das 4,72% N und 14,63% phenolisches OH enthielt, mit 110 g m-Xylylendiamin versetzt und bis zum Aufhören der Ammoniak-Entwicklung am Rückfluß zum Sieden erhitzt.

Man erhielt eine phenolfreie, viskose Mannich-Base mit einem Gehalt an phenolischen OH-Gruppen von 6,75% und einem Wasserstoffäquivalentgewicht von 81,5.

13) Verfahren c)

Beispiel 11 wurde wiederholt, wobei anstelle des Phenols 108 g c-Kresol eingesetzt wurden. Das Umsetzungsprodukt aus o-Kresol und Hexamethylentetramin enthielt 4,25% N und 12,86% phenolische OH-Gruppen. Die isolierte phenolfreie Mannich-Base hatte einen Gehalt an phenolischen OH-Gruppen von 6,51% und ein Wasserstoffäquivalentgewicht von 84,5.

14) Verfahren c)

In einem Dreihalskolben mit Rührer, Rückflußkühler und Thermometer wurden 163 g m-Xylylendiamin vorgelegt und unter Rühren 113 g Phenol und anschließend 28 g Hexamethylentetramin eingetragen. Dann wurde über das Reaktionsgemisch ein Stickstoffstrom geleitet, der über den Kühler zur Absorption des Ammoniaks in eine Vorlage mit 7 n Schwefelsäure geführt wurde. Nun wurde innerhalb von 45 Minuten auf 140°C erwärmt und 4 Stunden bei dieser Temperatur gehalten. Die ausgetriebene Ammoniakmenge betrug 13,6 g. Jetzt wurden 77 g m-Xylylendiamin zugegeben, die Temperatur auf 105°C gesenkt und 55 g Salicylsäure sowie 9,4 g Hexamethylentetramin nachgegeben. Dabei trat eine exotherme Reaktion ein und die Temperatur stieg auf 118°C. Durch zusätzliche Heizung wurde 3 Stunden bei 115 bis 118°C gehalten. In dieser Zeit wurden 4,6 Ammoniak übergetrieben.

Die erhaltene Mannichbase hatte einen Gehalt von 6,4% phenolischen OH-Gruppen (einschließlich der der Salicylsäure) und ein Wasserstoffäquivalentgewicht von 78,2.

15) Verfahren c)

In einem Dreihalskolben mit Rührer, Rückflußkühler und Thermometer wurden 136 g m-Xylylendiamin vorgelegt und unter Rühren 94 g Phenol und anschließend 23,4 g Hexamethylentetramin eingetragen. Dann wurde über das Reaktionsgemisch ein Stickstoffstrom geleitet, der über den Kühler zur Absorption des Ammoniaks in eine Vorlage mit 7 n Schwefelsäure geführt wurde. Nun wurde innerhalb einer Stunde auf 140°C erwärmt und 4 Stunden bei dieser Temperatur gehalten. Dann wurde auf 100°C abgekühlt und 136 g m-Xylylendiamin und 55 g Resorcin nachgegeben. Das Resorcin wurde durch Rühren bei 90 bis 100°C innerhalb von 15 Minuten gelöst, auf 115°C geheizt und 3 Stunden bei dieser Temperatur gehalten. Insgesamt werden 17 g Ammoniak agespalten.

Die erhaltene Mannichbase hatte einen Gehalt von 7,7% phenolischen OH-Gruppen und ein Wasserstoffäquivalentgewicht von 67,6.

Beispiele 16 und 17 (nach Verfahren b))

16a) 730 g t-Butylamin (10 Mol) wurden unter Rühren innerhalb 1 Stunde tropfenweise mit 820 g Formaldehyd (36,5 %ig) (10 Mol) versetzt, wobei die exotherme Reaktion durch Kühlen bei 40°C gehalten wurde. Der Ansatz wurde noch 30 Minuten bei dieser Temperatur belassen und nach Abkühlen auf Raumtemperatur in einen Scheidetrichter übergeführt. Nach vollständiger Phasentrennung wurde zunächst das Wasser abgelassen und als obere Phase 814 g (95,5% d.Th.) N-Methylen-t-butylamin erhalten.

b) 691 g N-Methylen-t-butylamin (8,13 Mol) wurden innerhalb von 15 Minuten mit 650 g Phenol (6,91 Mol) versetzt und auf 50°C erwärmt, wobei eine exotherme Reaktion einsetzte, die durch Kühlen bei 50°C gehalten wurde. Nach Abklingen der Wärmetönung wurde 2 Stunden bei 50—55°C gerührt, auf 80°C

geheizt und 1 Stunde bei dieser Temperatur gehalten. Dann wurde langsam ein Vakuum von 40—65 mbar angelegt und dieses 30 Minuten aufrechterhalten. Dabei destillierte Wasser und überschüssiges Amin ab. Die Ausbeute betrug 1268 g (94,6% d.Th.), und die Viskosität der Mannich-Base lag bei 80 mPa.s bei 25°C; Wasserstoffäquivalent 165; Gehalt an phenolischem Hydroxyl 8,76%.

c) 165 g t-Butylamin-Mannich-Base (1 Mol) wurden unter Rühren mit 136 g m-Xylylendiamin (1 Mol) versetzt und auf 120°C erwärmt. Dabei trat die Destillation von t-Butylamin ein (Brüdentemperatur 43°C), das in einem auf 0°C gekühlten Intensivkühler kondensiert wurde. Die Temperatur des Ansatzes stieg innerhalb von 1 Stunde von 120°C auf 140°C und wurde bei dieser Temperatur noch 1 Stunde gehalten, bis die Destillation vollständig beendet war. Es wurden 66 g t-Butylamin (90% d.Th.) als Destillat erhalten. Die Mannich-Base (Viskosität 35 000 mPa.s bei 25°C) hatte einen phenolischen Hydroxylgruppengehalt von 6,34% und ein Wasserstoffäquivalent von 76.

17a) 174 g t-Amylamin (2 Mol) wurden unter Rühren mit 160 g Phenol (1,7 Mol) versetzt und 164 g Formaldehyd (36,5 %ig) innerhalb 1 Stunde bei 40°C zugetropft. Dann wurde 5 Stunden bei 40°C gerührt, auf Raumtemperatur abgekühlt und der Ansatz in einen Scheidetrichter übergeführt. Die Phasen wurden getrennt und die Harzphase 1 Stunde bei 80°C bei einem Vakuum von 40—65 mbar gehalten, wobei restliches Wasser und überschüssiges Amin abdestillierten. Es wurden 320 g (ca. 90% d.Th.) Mannich-Base mit einer Viskosität von 97 mPa.s erhalten. Der Hydroxylgruppengehalt dieses Produkts betrug 8,08% und das Wasserstoffäquivalent 179.

b) 179 g der t-Amylamin-Mannich-Base (1 Mol) wurden unter Rühren mit 136 g m-Xylylendiamin (1 Mol) versetzt und auf 120°C erwärmt. Dabei trat die Destillation von t-Amylamin ein (Brüdentemperatur 75°C). Die Temperatur des Ansatzes stieg innerhalb von 1 Stunde von 120°C auf 140°C und wurde bei dieser Temperatur noch 1 Stunde gehalten, bis die Destillation vollständig beendet war. Es wurden 78 g t-Amylamin (89,7% d.Th.) als Destillat erhalten. Die relativ niedrigviskose Mannich-Base hatte einen phenolischen Hydroxylgruppengehalt von 6,34% und ein Wasserstoffäquivalent von 76.

## II) Herstellung von Beschichtungen

Beispiel 18 und Vergleichsversuche 19a V) bis 19c V)

Zur Herstellung von Beschichtungen wurden, ausgehend von der Mannich-Base gemäß Beispiel 2, Härtungsmittel verschiedener Konzentration, d.h. mit unterschiedlichem Gehalt an phenolischen OH-Gruppen, eingesetzt:

18) Mannich-Base gemäß Beispiel 2,
Gehalt an phenolischem Hydroxyl: 6,95%
Wasserstoffäquivalent-Gewicht: 80,7.

19a V) Vergleich
Mannich-Base gemäß Beispiel 2, verdünnt mit 10% m-Xylylendiamin,
Gehalt an phenolischem Hydroxyl: 6,26%
Wasserstoffäquivalent-Gewicht: 71,2.

19b V) Vergleich
Mannich-Base gemäß Beispiel 2, verdünnt mit 20% m-Xylylendiamin
Gehalt an phenolischem Hydroxyl: 5,56%
Wasserstoffäquivalent-Gewicht: 63,4.

19c V) Vergleich
Mannich-Base gemäß Beispiel 2, verdünnt mit 30% m-Xylylendiamin,
Gehalt an phenolischem Hydroxyl: 4,87%
Wasserstoffäquivalent-Gewicht: 57,2

100 g eines niedrigmolekularen Diphenylolpropan-Diglycidyläthers mit einer Viskosität von ca. 9000 mPa.s (25°C) und einem Epoxidäquivalentgewicht von 185 wurden mit 8 g Titandioxid vom Rutiltyp und 8 g Eisenoxid-schwarz unter Zuhilfenahme von 1 g eines mit i-Butanol verätherten Harnstoff-Formaldehydharzes und 0,5 g eines als Verlaufmittel geeigneten Siliconöls angerieben.

Auf entfetteten und entrosteten Eisenblechen (8 × 5 × 0,2 cm) wurden Beschichtungen aus dem pigmentierten Epoxidharz und der Mannich-Base gemäß Beispiel 2 bzw. ihren Lösungen in m-Xylylendiamin als Härtungsmittel aufgetragen, wobei Epoxidharz und Härtungsmittel entsprechend ihrem Epoxydäquivalent und Wasserstoffäquivalentgewicht gemischt wurden. Zur besseren Vermischung wurden die Härtungsmittel, wenn notwendig, mit Äthylalkohol oder anderen geeigneten Alkoholen auf ca. 5000 mPa.s (25°C) verdünnt. Die Beschichtung wurde dreimal allseitig im Abstand von je 24 Stunden aufgetragen, so daß eine Schichtstärke von etwa 500 µm resultierte.

Diese beschichteten Bleche wurden nach einer Durchhärtungszeit von 14 Tagen in verschiedenen Medien zur Prüfung der Chemikalienbeständigkeit gelagert. Die Veränderungen der Filme wurde täglich beobachtet.

Die Ergebnisse sind nachstehenden Tabellen zu entnehmen. d bedeutet Tag.

Prüfung der Chemikalienbeständigkeit

| Behandlung mit | Beispiel 18 | Vegleichsbeispiel 19aV | Vergleichsbeispiel 19bV | Vergleichsbeispiel 19cV |
|---|---|---|---|---|
| Essigsäure 5% | geringer Filmangriff nach 14d stärkerer Filmangriff nach 60 d | geringer Filmangriff nach 10d, stärkerer Filmangriff nach 35 d | geringer Filmangriff nach 6d, Filmzerstörung nach 20d | geringer Filmangriff n. 3d, Filmzerstörung nach 10d |
| Milchsäure 5% | geringer Filmangriff nach 30d, stärkerer Filmangriff nach 80d | geringer Filmangriff nach 20d, stärkerer Filmangriff nach 60d | geringer Filmangriff nach 7d, Filmzerstörung nach 30d | geringer Filmangriff nach 3d, Filmzerstörung nach 20d |
| Schwefelsäure 78% | sofortige Oberflächenverfärbung, nach 30d Ausbildung einer Oxydations-Schutzschicht | sofortige Oberflächenverfärbung, nach 25d Ausbildung einer Oxydations-Schutzschicht | sofortige Oberflächenverfärbung, nach 20d Ausbildung einer Oxydations-Schutzschicht | sofortige Oberflächenverfärbung, nach 20d Ausbildung einer Oxydations-Schutzschicht |
| Salpetersäure 20% | Oberflächenverfärbung nach 7d, kein weiterer Filmangriff | Oberflächenverfärbung nach 7d, kein weiterer Filmangriff | Oberflächenverfärbung nach 6d, kein weiterer Filmangriff | Oberflachenverfarbung nach 5d, kein weiterer Filmangriff |
| Phosphorsäure 40% | Oberflächenverfärbung nach 7d, geringer Filmangriff nach 20d, stärkerer nach 60d | Oberflächenverfärbung nach 7d, geringer Filmangriff nach 15d, stärkerer nach 50d | Oberflächenverfärbung nach 5d, geringer Filmangriff nach 10d, stärkerer nach 40d | Oberflächenverfärbung nach 4d, geringer Filmangriff nach 7d, stärkerer nach 35d |
| Methyläthylketon | geringer Filmangriff nach 2d, starker Filmangriff nach 14d | geringer Filmangriff nach 2d, starker Filmangriff nach 10d | geringer Filmangriff nach 2d, starker Filmangriff nach 7d | geringer Filmangriff nach 1d, starker Filmangriff nach 4d |
| Äthylalkohol vergällt 96% | kein Filmangriff innerhalb von 90d | kein Filmangriff innerhalb von 90d | Filmerweichung nach 40d | Filmerweichung nach 25d |

Aus den Vergleichsversuchen ergibt sich deutlich die Verschlechterung der Chemikalienbeständigkeit insbesondere gegenüber organischen Säuren und Alkohol bei Verwendung von Härtungsmitteln mit Gehalten an phenolischem Hydroxyl <6,3 Gew.-%.

Vergleichsversuche 20 bis 23b V

In einer weiteren Versuchsserie wurden unter den gleichen Bedingungen folgende phenolfreien Mannich-Basen auf ihre Chemikalienbeständigkeit untersucht:

20) Mannich-Base gemäß Beispiel 1 mit einem Gehalt an phenolischem Hydroxyl von 6,91% und einem Wasserstoffäquivalentgewicht von 80,7.

21) Mannich-Base gemäß Beispiel 6 mit einem Gehalt an phenolischem Hydroxyl von 6,59% und einem Wasserstoffäquivalentgewicht von 86.

22) Mannich-Base gemäß Beispiel 16c mit einem Gehalt an phenolischem Hydroxyl von 6,34% und einem Wasserstoffäquivalent von 76.

23a V) Vergleich Mannich-Base gemäß Vergleichs-Beispiel 10V mit einem Gehalt an phenolischem Hydroxyl von 9,32% und einem Wasserstoffäquivalentgewicht von 53,3.

23b V) Vergleich Mannich-Base gemäß Vergleichs-Beispiel 11V mit einem Gehalt an phenolischem Hydroxyl von 6,58% und einem Wasserstoffäquivalentgewicht von 53.

Prüfung der Chemikalienbeständigkeit

| Behandlung mit | Beispiel 20 | Beispiel 21 | Beispiel 22 |
|---|---|---|---|
| Essigaure 5% | geringer Filmangriff nach 13d, stärkerer Filmangriff mach 60d | geringer Filmangriff nach 14d, stärkerer Filmangriff nach 65d | geringer Filmangriff nach 16d, stärkerer Filmangriff nach 70d |
| Milchsäure 5% | geringer Filmangriff nach 30d, stärkerer Filmangriff nach 75d | geringer Filmangriff nach 25d, stärkerer Filmangriff nach 70d | geringer Filmangriff nach 36d, stärkerer Filmangriff nach 75d |
| Schwefelsäure 78% | sofortige Oberflächen-verfärbung, nach 35d Ausbildung einer Oxy-dations-Schutzschicht | sofortige Oberflächen-verfärbung, nach 30d Ausbildung einer Oxy-dations-Schutzschicht | sofortige Oberflächen-verfärbung, nach 35d Ausbildung einer Oxy-dations-Schutzschicht |
| Salpetersäure 20% | Oberflächenverfärbung nach 6d, kein weiterer Filmangriff | Oberflächenverfärbung nach 7d, kein weiterer Filmangriff | Oberflachenverfarbung nach 8d, kein weiterer Filmangriff |
| Phosphorsäure 40% | Oberflächenverfärbung nach 8d, geringer Filmangriff nach 20d, stärkerer nach 60d | Oberflächenverfärbung nach 6d, geringer Filmangriff nach 15d, stärkerer nach 50d | Oberflächenverfärbung nach 8d, geringer Filmangriff nach 18d, stärkerer nach 60d |

Fortsetzung der Tabelle

| Behandlung mit | Vergleichsbeispiel 23a V | Vergleichsbeispiel 23b V |
|---|---|---|
| Essigsäure 5% | starker Filmangriff nach 3d, Filmzerstörung nach 15d | starker Filmangriff nach 3d, Filmzerstörung nach 16d |
| Milchsäure 5% | starker Filmangriff nach 7d, Filmzerstörung nach 25d | starker Filmangriff nach 8d, Filmzerstörung nach 28d |
| Schwefelsäure 78% | sofortige Oberflächenverfärbung, nach 20d Ausbildung einer Oxydations-Schutzschicht | sofortige Oberflächenverfärbung, nach 20d Ausbildung einer Oxydations-Schutzschicht |
| Salpetersäure 20% | Oberflächenverfärbung nach 5d, kein weiterer Filmangriff | Oberflächenverfärbung nach 6d, kein weiterer Filmangriff |
| Phosphorsäure 40% | Oberflächenverfärbung nach 6d, geringer Filmangriff nach 10d, stärkerer nach 40d | Oberflächenverfärbung nach 7d, geringer Filmangriff nach 7d, stärkerer nach 35d |

Fortsetzung der Tabelle

| Behandlung mit | Beispiel 20 | Beispiel 21 | Beispiel 22 | Vergleichs-beispiel 23a V | Vergleichs-beispiel 23b V |
|---|---|---|---|---|---|
| Methyläthyl keton | geringer Filman-griff nach 2d, starker Filman-griff nach 12d | geringer Filman griff nach 2d, starker Filman-griff nach 13d | geringer Filman-griff nach 2d, starker Filman-griff nach 14d | geringer Filman-griff nach 2d, starker Filman griff nach 6d | geringer Filman-griff nach 1d, starker Filman-griff nach 5d |
| Äthyl-alkohol, vergällt 96% | kein Filman-griff innerhalb von 90d | kein Filman-griff innerhalb von 90d | kein Filman-griff innerhalb von 90d | Filmerweichung nach 50d | Filmerweichung nach 35d |

Aus den Vergleichs-Versuchen 20 bis 23b V ist zu ersehen, daß für eine ausreichende Chemikalienbeständigkeit, insbesondere eine Beständigkeit gegenüber organischen Säuren neben einem Gehalt von phenolischem Hydroxyl >6,3% als basischer Partner der Mannich-Base unbedingt Xylylendiamin bzw. dessen Hydrierungsprodukt erforderlich ist. Auch Versuche mit der Mannich-Base gemäß Vergleichsbeispiel 5V zeigten eine schlechtere Chemikalienbeständigkeit als die mit Mannich-Basen aus Xylylendiamin hergestellten Proben.

Vergleichsversuche 24 bis 26

In dieser Versuchsserie werden Mannich-Basen unterschiedlicher Struktur auf ihre Chemikalienbeständigkeit untersucht.

24) Mannich-Base gemäß Beispiel 4 mit einem Gehalt an phenolischem Hydroxyl von 6,83% und einem Wasserstoffäquivalentgewicht von 82,7,

25) Mannich-Base gemäß Beispiel 3 mit einem Gehalt an phenolischem Hydroxyl von 6,59% und einem Wasserstoffäquivalentgewicht von 85,3,

26) Mannich-Base gemäß Beispiel 7 mit einem Gehalt an phenolischem Hydroxyl von 6,45% und einem Wasserstoffäquivalentgewicht von 77,3.

Wie sich aus nachstehender Tabelle ergibt, tritt zwischen der Mannich-Base aus m-Xylylendiamin und Bis-(aminomethyl-)-cyclohexan kein Unterschied in der Chemikalienbeständigkeit auf, während der Methylsubstituent eine geringe Beeinträchtigung hervorruft (Versuch 25).

Prufung der Chemikalienbestandigkeit

| Behandlung mit | Versuch 24 | Versuch 25 | Versuch 26 |
|---|---|---|---|
| Essigsäure 5% | geringer Filmangriff nach 15d, stärkerer Filmangriff nach 60d | geringer Filmangriff nach 16d, stärkerer Filmangriff nach 65d | geringer Filmangriff nach 10d, stärkerer Filmangriff nach 40d |
| Milchsäure 5% | geringer Filmangriff nach 28d, stärkerer Filmangriff nach 70d | geringer Filmangriff nach 25d, stärkerer Filmangriff nach 75d | geringer Filmangriff nach 12d, stärkerer Filmangriff nach 55d |
| Schwefelsäure 78% | sofortige Oberflächenverfärbung, nach 30d Ausbildung einer Oxydations-Schutzschicht | sofortige Oberflächenverfärbung nach 35d, Ausbildung einer Oxydations-Schutzschicht | sofortige Oberflächenverfärbung nach 25d, Ausbildung einer Oxydations-Shutzschicht |
| Salpetersäure 20% | Oberflächenverfärbung nach 6d, kein weiterer Filmangriff | Oberflächenverfärbung nach 6d, kein weiterer Filmangriff | Oberflächenverfärbung nach 4d, kein weiterer Filmangriff |
| Phosphorsäure 40% | Oberflächenverfärbung nach 7d, geringer Filmangriff nach 18d, stärkerer nach 55d | Oberflächenverfärbung nach 6d, geringer Filmangriff nach 16d, stärkerer nach 45d | Oberflächenverfärbung nach 5d, geringer Filmangriff nach 8d, stärkerer nach 30d |
| Methyläthyl keton | geringer Filmangriff nach 2d, starker Filmangriff nach 13d | geringer Filmangriff nach 2d, starker Filmangriff nach 17d | geringer Filmangriff nach 2d, starker Filmangriff nach 8d |
| Äthylalkohol-vergällt 96% | kein Filmangriff innerhalb von 90d | kein Filmangriff innerhalb von 90d | Filmerweichung nach 60d |

Formelblatt

A

(1) 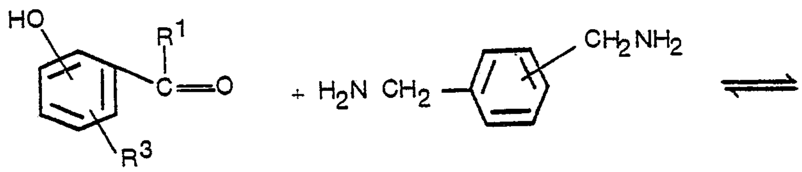

(2) 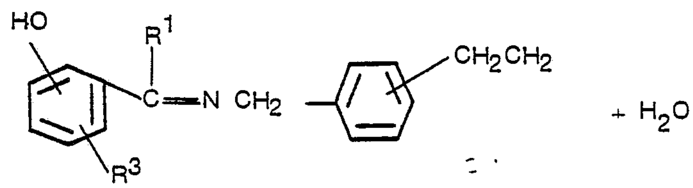

(3) 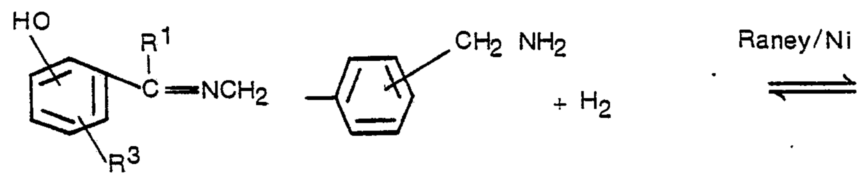


(4) 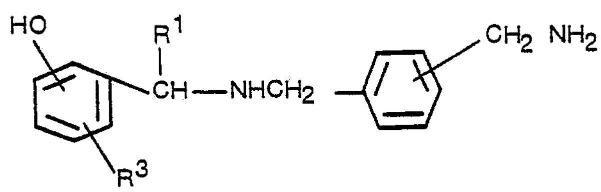

B

(5) 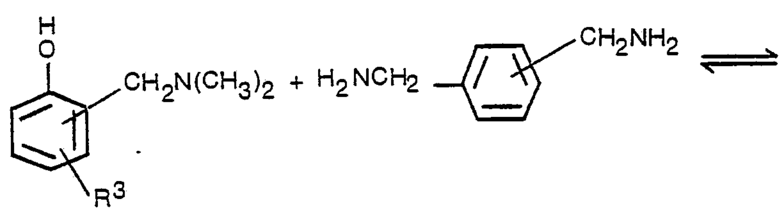

(6) 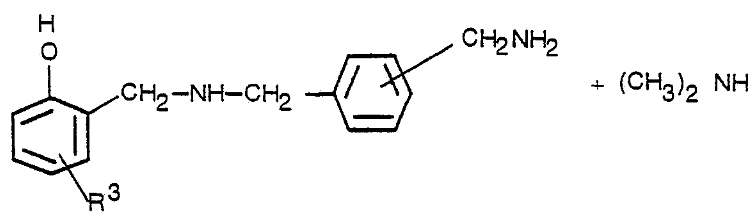

C

(7)

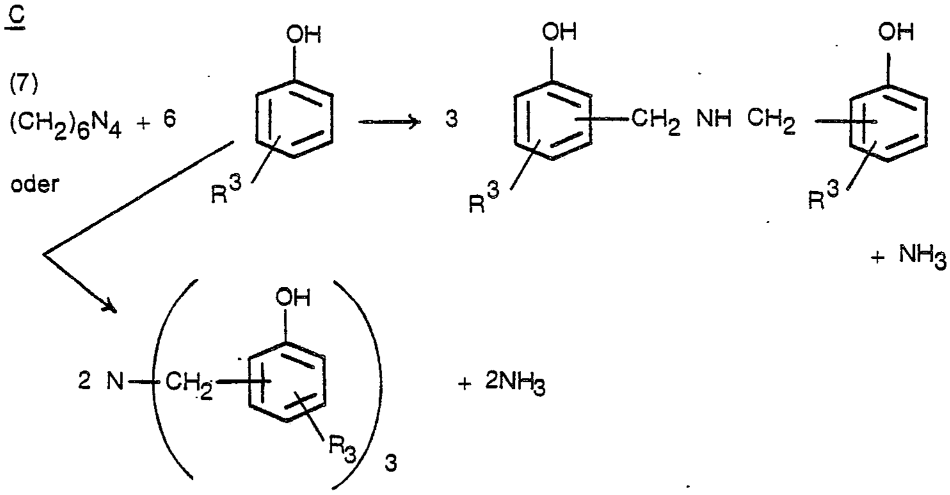


(8)

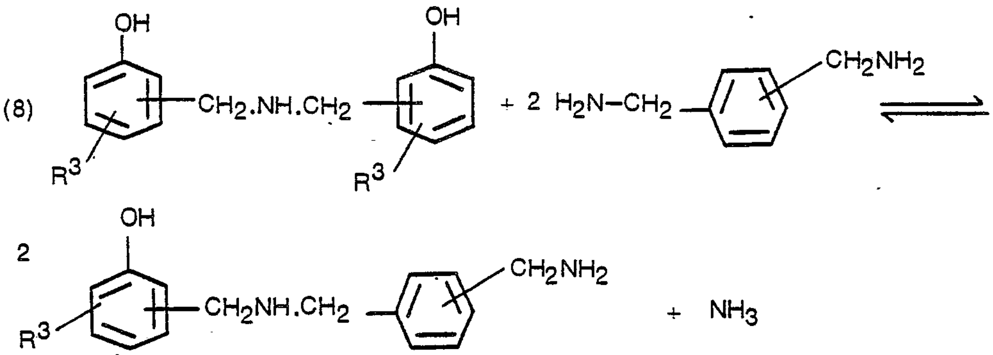

(D)

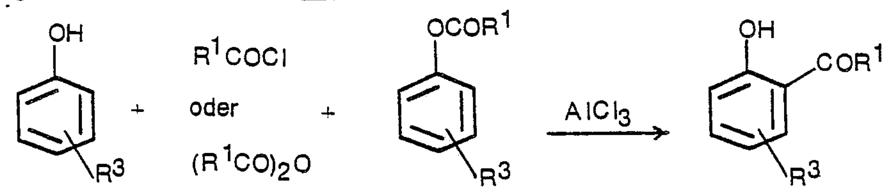


(9)

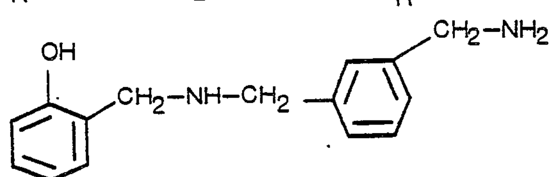

(10)

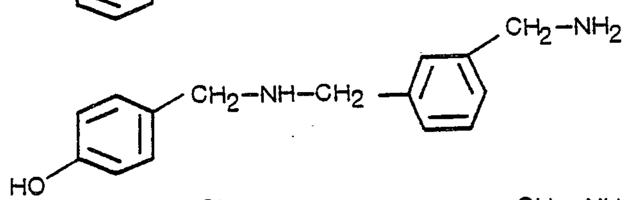

(11)

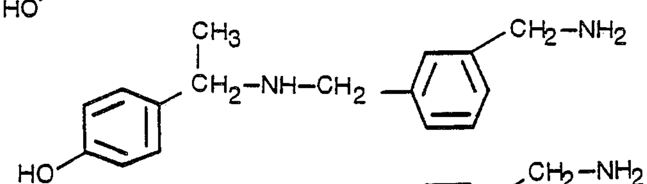

(12)

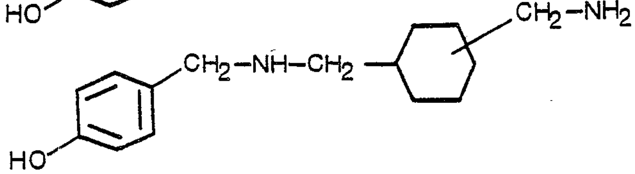

(13) V (Vergleich)

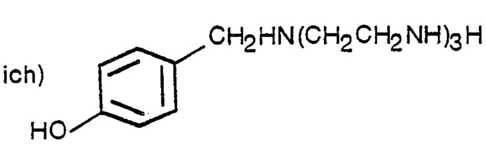

**Patentansprüche**

1. Verfahren zum Herstellen von Formkörpern und Überzügen durch Umsetzen von Epoxydverbindungen mit mehr als einer 1,2-Epoxydgruppe pro Molekül, die sich gegebenenfalls im Gemisch mit Monoepoxyden befinden, mit substituierten Aminen, wobei man als substituierte Amine Verbindungen der allgemeinen Formel

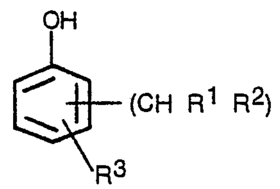

(I)

einsetzt, worin

$R^1$ H oder $CH_3$,

$R^2$

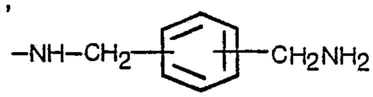

(II) und/oder

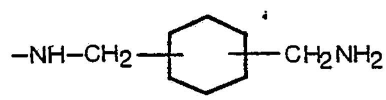

(III)

und

$R^3$ H–, HO–, HOOC– oder $CH_3$ bedeuten,

dadurch gekennzeichnet, daß solche Amine der Formel (I), die keine freien Phenole enthalten, eingesetzt werden, die durch Umsetzung von Xylylendiamin oder dessen Isomerengemischen und/oder dessen Hydrierungsprodukten in Form von Bis-(aminomethyl-)-cyclohexan nach einem der folgenden Verfahren hergestellt worden sind:

a) mit Hydroxybenzaldehyden oder Hydroxyacetophenonen in erster Stufe zu den Schiff'schen Basen, in zweiter Stufe deren Hydrierung zu Verbindungen der Formel (I)

b) mit phenolfreiem Dimethylaminomethyl-phenol oder -kresol bzw. mit phenolfreien Mannich-Basen aus Phenolen, Formaldehyd und solchen primären Monoaminen, deren aliphatisches α-C-Atom an mindestens zwei aliphatische C-Atome von Kohlenwasserstoffresten gebunden ist, und/oder deren Substitutionsprodukte, die eine für die Reaktion inerte Gruppe enthalten, unter Abspaltung des Dimethylamins bzw. der in der Mannich-Base enthaltenen primären Monoamine unter Bildung von Verbindungen der Formel (I),

c) mit Phenol-Hexamethylentetramin-Kondensationsprodukten der Formeln

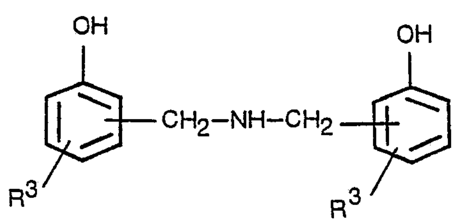

(IV) und/oder

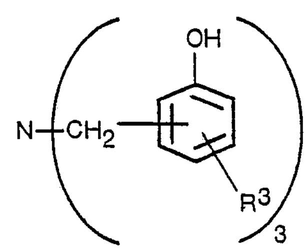

(V)

die keine freien Phenole enthalten, zu Verbindungen der Formel (I) unter Abspaltung von Ammoniak.

2. Verfahren nach Anspruch 1, dadurch gekennzeichnet, daß die Amine der Formel (I) nach Verfahren b) und c) bei einer Temperatur von 100 bis 200, vorzugsweise 120 bis 160°C hergestellt worden sind.

3. Verfahren nach Anspruch 1 oder 2, dadurch gekennzeichnet, daß die substituierten Amine in einem Anteil eingesetzt werden, der den im Epoxydharz enthaltenen Epoxydgruppen zumindest äquivalent ist und höchstens einem Überschuß von 50 Mol-% entspricht.

4. Verfahren nach einem oder mehreren der Ansprüche 1 bis 3, dadurch gekennzeichnet, daß die als Härter eingesetzten substituierten Amine für sich oder in Lösung einen Mindestgehalt an phenolischen Gruppen von 6,3, vorzugsweise über 6,7 Gew.-% aufweisen.

5. Verfahren nach einem oder mehreren der Ansprüche 1 bis 4, dadurch gekennzeichnet, daß die Umsetzung der Epoxydverbindungen mit den Aminen der Formel (I) bei einer Temperatur von mindestens −5°C erfolgt.

**Revendications**

1. Procédé de fabrication d'objets façonnés et de revêtements par réaction d'époxydes comportant par molécule plus d'un groupe époxyde-1,2, qui se trouvent éventuellement en mélange avec des mono-époxydes, avec des amines substituées, selon lequel on utilise comme amines substituées des composés de formule générale:

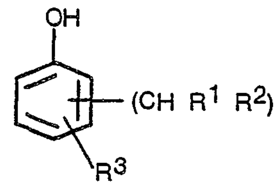 (I)

dans laquelle:

$R^1$ représente H ou $CH_3$,

$R^2$ représente 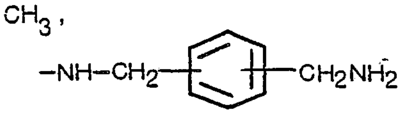 (II) et/ou

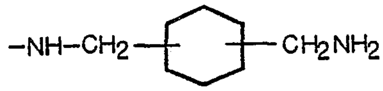 (III)

et

$R^3$ représente H–, HO–, HOOC– ou $CH_3$,

procédé caractérisé en ce qu'on utilise des amines de formule (I), ne contenant pas de phénols libres, et que l'on a préparées par réaction de la xylylènediamine ou de ses mélanges isomères et/ou de ses produits d'hydrogénation, sous forme du bis-(aminométhyl)-cyclohexane, selon l'un des procédés suivants:

a) avec des hydroxybenzaldéhydes ou des hydroxyacétophénones dans une première étape, pour obtenir les bases de Schiff, et hydrogénation dans une seconde étape de ces bases pour obtenir des composés de formule (I),

b) avec du diméthylaminométhylphénol ou diméthylaminométhylcrésol sans phénol ou avec des bases de Mannich sans phénol et obtenues à partir de phénols, du formaldéhyde et de monoamines primaires, dont l'atome de carbone aliphatique en alpha est fixé sur au moins deux atomes de carbone aliphatiques de radicaux d'hydrocarbures, et/ou leurs produits de substitution contenant un groupe inerte à l'égard de la réaction, avec séparation de la diméthylamine ou des monoamines primaires contenues dans la base de Mannich et formation de composés de formule (I),

c) avec des produits de condensation phénol/hexaméthylènetétramine, répondant aux formules:

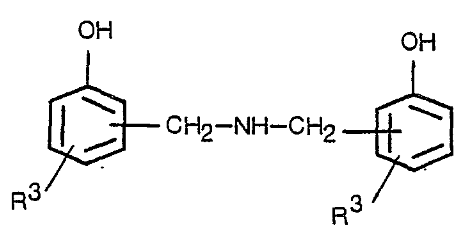 (IV) et/ou 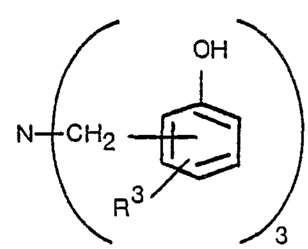 (V)

qui ne contiennent pas de phénols libres, pour obtenir des composés de formule (I) avec séparation d'ammoniac.

2. Procédé selon la revendication 1, caractérisé en ce qu'on a préparé des amines de formule (I) selon le procédé b) et c) à une température de 100 à 200, avantageusement 120 à 160°C.

3. Procédé selon la revendication 1 ou 2, caractérisé en ce qu'on utilise les amines substituées en une proportion qui équivaut au moins aux groupes époxydes contenus dans la résine époxyde et qui correspond au maximum à un excès de 50 moles %.

4. Procédé selon l'une au moins des revendications 1 à 3, caractérisé en ce que les amines substituées utilisées comme durcisseurs présentent, par elles-mêmes ou en solution, une teneur minimale en des groupes phénoliques de 6,3% et, de préférence, une teneur supérieure à 6,7% en poids.

5. Procédé selon l'une quelconque des revendications 1 à 4, caractérisé en ce que la réaction des époxydes avec les amines de formule (I) s'effectue à une température d'au moins −5°C.

**Claims**

1. Process for the preparation of shaped articles and coatings by reaction of epoxy compounds having more than one 1,2-epoxy group per molecule, optionally in mixture with monoepoxides, with substituted amines, whereby as substituted amines compounds of the general formula

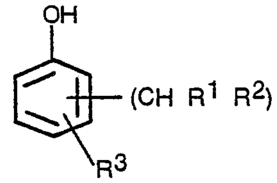 (I)

are used, wherein

$R^1$ is hydrogen or $CH_3$,

$R^2$ is 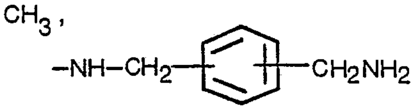 (II) and / or

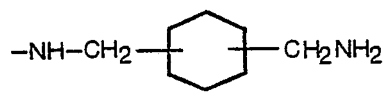 (III)

and

$R^3$ is H–, HO–, HOOC– or $CH_3$,

characterized in that such amines of the formula I, containing no free phenoles are used which have been prepared by reaction of xylenediamine or its isomeric mixtures and/or its hydrogenation products in the form of bis-(aminomethyl-)cyclohexane according to one of the following processes:

a) in a first reaction step with hydroxybenzaldehydes or hydroxyacetophenones to Schiff's bases, followed in a second step by its hydrogenation to compounds of the formula I,

b) with phenol-free dimethylaminomethyl-phenol or -cresol and with phenol-free Mannich-bases of phenols, formaldehyde and such primary monoamines respectively, which aliphatic α-carbon atom is bound to at least two aliphatic carbon atoms of hydrocarbon residues and/or its substitution products containing one group which is inert against the reaction, under splitting off of the dimethylamine and primary monoamines contained in the Mannich-base respectively under formation of compounds of the formula I,

c) with phenol-hexamethylenetetramine-condensation products of the formulae

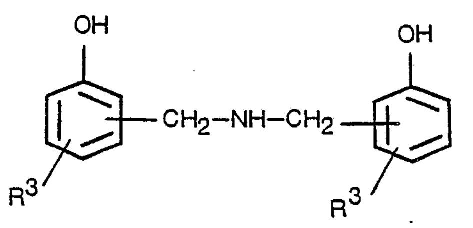 (IV) and / or 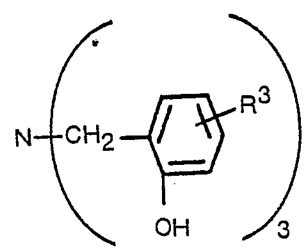 (V)

which contain no free phenols to compounds of the formula I by splitting off of ammonia.

2. Process according to claim 1, characterized in that the amines of the formula I have been prepared according to process b) and c) at a temperature of from 100 to 200, preferably 120 to 160°C.

3. Process according to claim 1 or 2, characterized in that the substituted amines are applied in an amount which is at least equivalent to the epoxy groups of the epoxy resin and corresponds at most to a surplus of 50 mol-%.

4. Process according to one or more of the claims 1 to 3, characterized in that the substituted amines, used as hardeners per se or in solution, have a minimum content of phenolic groups of 6,3, preferably more than 6,7% b.w.

5. Process according to one or more of the claims 1 to 4, characterized in that the reaction of the epoxy compounds with the amines of the formula I takes place at a temperature of at least −5°C.